# FASCICULE DE BREVET EUROPEEN

(11) **EP 1 252 919 B1**
(45) Date de publication et mention de la délivrance du brevet: **08.09.2004**
(21) Numéro de dépôt: 02290834.7
(22) Date de dépôt: 04.04.2002
(51) Int. Cl.: B01D 41/04, B01D 46/24, F01N 3/023, F01N 3/035

(54) **Procédé et dispositif de nettoyage d'un filtre à particules d'un véhicule automobile**
Verfahren und Vorrichtung zur Reinigung eines Partikelfilters eines Kraftfahrzeugs
Method and apparatus for cleaning a particulate filter of a motor vehicle

(30) Priorité: 25.04.2001 FR 0105582
(43) Date de publication de la demande: 30.10.2002
(73) Titulaire: Peugeot Citroen Automobiles SA, 92200 Neuilly sur Seine (FR)
(72) Inventeur: Lacomblez, Philippe, 91630 Marolles en Hurepoix (FR); Rigaudeau, Christine, 92800 Puteaux (FR); Fontaine, Denis, 25700 Mathay (FR)
(74) Mandataire: Jacobson, Claude

(56) Documents cités:
- EP-A- 0 335 240
- DE-A- 4 313 132
- FR-A- 2 794 992
- US-A- 5 444 892

## Description

L'invention concerne un procédé et un dispositif de nettoyage d'un filtre à particules d'un véhicule automobile.

Les gaz d'échappement des moteurs Diesel qui utilisent du gazole comme carburant renferment à la fois des polluants gazeux tels que des hydrocarbures imbrûlés et des oxydes d'azote ou de carbone et des polluants solides qui sont principalement constitués par des particules de suie. Les normes antipollution appliquées aux moteurs Diesel nécessitent une élimination de plus en plus poussée des émissions de particules de suie dans les gaz d'échappement de ces moteurs.

Afin d'assurer l'élimination des particules de suie, un post-traitement des gaz d'échappement utilisant un filtre à particules est nécessaire.

Un tel filtre à particules est installé dans la ligne d'échappement du moteur et comporte au moins un élément de filtration constitué par un support filtrant à structure poreuse éventuellement associé à un autre élément de dépollution, fixé dans une enveloppe métallique qui est reliée à la ligne d'échappement. Le support filtrant ou les éléments filtrants disposés dans l'enveloppe métallique du filtre, appelés "canning", sont généralement constitués par des éléments en matière céramique poreuse. Le support filtrant est traversé par les gaz d'échappement entre une extrémité d'entrée et une extrémité de sortie du filtre, ce qui permet de retenir les particules solides de suie en suspension dans les gaz d'échappement, afin d'obtenir un gaz épuré en sortie. Le filtre à particules peut être disposé en aval d'un catalyseur.

Au cours du fonctionnement du moteur, le support filtrant se charge de particules de suie qui se déposent à l'intérieur de ses porosités, de sorte que le filtre se colmate progressivement. Le décolmatage du filtre peut être obtenu en faisant brûler les suies déposées dans les porosités du support filtrant, sur la ligne même d'échappement, pendant l'utilisation du véhicule automobile.

Les suies, en présence d'oxygène, brûlent à des températures de l'ordre de 550°C à 600°C. De tels niveaux thermiques ne sont que rarement atteints par les gaz d'échappement d'un moteur Diesel d'un véhicule de tourisme. De ce fait, il est nécessaire de favoriser le début de la régénération des éléments de filtration par ajout dans le carburant d'un additif permettant d'abaisser la température de combustion des suies.

Les additifs sont généralement constitués par des composés organométalliques qui, mélangés dans des proportions déterminées au gazole, suivent le circuit du gazole. Ils sont ainsi injectés dans la chambre de combustion, par le système d'injection et leurs résidus de combustion se retrouvent dans les gaz d'échappement.

La présence de ces additifs dans le filtre à particules où ils sont mélangés intimement avec les particules de suies leur permet de jouer un rôle catalyseur lors de la combustion des particules de suie et d'abaisser les températures d'inflammation des suies aux environs de 350°C à 550°C.

La combustion, éventuellement catalysée, des suies dans le filtre à particules permet d'éliminer les composés organiques et le carbone contenu dans ces suies. Cependant, à l'issue de la régénération du filtre par combustion, il subsiste des résidus minéraux qui sont retenus dans les pores et les canaux de l'élément filtrant. Ces résidus minéraux sont constitués en particulier par des résidus provenant des additifs d'aide à la combustion des suies, d'autres additifs incorporés au gazole ou encore de lubrifiant ; ces résidus peuvent être constitués également par des particules dues à l'usure du moteur ou provenant de l'environnement extérieur, lorsque de telles particules ne sont pas retenues par le filtre à air du moteur. Tous ces résidus restent stockés dans les pores et les canaux de l'élément filtrant du filtre à particules. Du point de vue de la composition chimique, de nombreuses espèces peuvent être présentes dans ces résidus, par exemple des oxydes, des sulfates, des nitrates ou des phosphates d'éléments tels que le cérium, le zinc, le calcium, le cuivre, le fer ou le nickel.

Le filtre à particules s'encrasse progressivement et, après une certaine durée de fonctionnement dans la ligne d'échappement, le colmatage de l'élément filtrant peut être tel qu'il en résulte une détérioration des performances du moteur et une augmentation de la consommation de carburant. Il est nécessaire alors, pour restaurer des conditions de fonctionnement satisfaisantes du filtre, soit de remplacer le filtre par un filtre neuf, soit de nettoyer le filtre.

Du fait du coût élevé des filtres à particules, il peut être intéressant économiquement d'éviter un remplacement du filtre.

On a proposé, dans le FR 2.794.992, un procédé et un dispositif de nettoyage d'un filtre à particules dans lequel on démonte au moins une partie de la ligne d'échappement comportant le filtre à particules et on fait passer à travers le support filtrant du filtre à particules, au moins un courant de fluide de nettoyage à une pression et à un débit contrôlé, de manière à dissocier et à entraîner les résidus contenus dans le support filtrant.

Le procédé est mis en oeuvre en utilisant une buse alimentée en liquide de nettoyage sous pression, généralement de l'eau, et en gaz sous pression, généralement de l'air, pour produire au moins un jet de nettoyage, de rinçage ou de séchage qui est dirigé sur une face d'extrémité de sortie du support filtrant du filtre à particules, de manière à traverser le support filtrant, entre son extrémité de sortie et son extrémité d'entrée. La buse d'injection de fluide de nettoyage ou de rinçage doit être montée sur un ensemble mécanique mobile de manière à pouvoir balayer l'ensemble de la surface d'extrémité de sortie du support filtrant et la pression du jet produit par la buse doit être suffisante pour que les fluides traversent l'ensemble du support filtrant.

Les éléments mécaniques utilisés pour le support et le déplacement de la buse lors du balayage sont susceptibles d'être détériorés, au cours du temps, par les fluides utilisés pour le nettoyage et le rinçage de filtres, en particulier lorsque ces fluides renferment des additifs de nettoyage.

De manière générale, l'utilisation et la maintenance de l'installation de nettoyage peuvent être délicates et peu compatibles avec une utilisation intensive, dans un atelier d'entretien.

Le but de l'invention est de proposer un procédé de nettoyage d'un filtre à particules d'un véhicule automobile comportant un support filtrant ayant une structure poreuse, éventuellement associé à un catalyseur, fixé dans une enveloppe métallique, le filtre étant monté en service dans une ligne d'échappement du véhicule automobile, de façon à être traversé, entre une extrémité d'entrée et une extrémité de sortie, par un courant de gaz d'échappement du moteur du véhicule automobile renfermant des particules de suies dont une partie au moins qui est retenue par le support filtrant subit une combustion, éventuellement catalysée, dans le support filtrant, sous l'effet d'un échauffement par les gaz d'échappement du moteur pour régénérer le filtre de la ligne d'échappement, le procédé de nettoyage consistant à démonter au moins une partie de la ligne d'échappement comportant le filtre à particules pour la séparer du véhicule automobile et à faire passer, à travers le support filtrant, un courant d'un liquide de nettoyage, de manière à dissocier et à entraîner des résidus minéraux retenus dans le support filtrant, ce procédé pouvant être mis en oeuvre de manière simple et facilement automatisable dans un atelier d'entretien.

Dans ce but, on réalise successivement une pluralité de cycles de mouillage du support filtrant, au cours de chacun desquels on met en contact avec l'ensemble d'une face de sortie du support filtrant, un liquide de nettoyage à une pression d'alimentation supérieure à la pression atmosphérique, puis on exerce sur le liquide de nettoyage en contact avec la face de sortie du support filtrant, une pression de mouillage par l'intermédiaire d'un gaz à une première pression P1 supérieure à la pression atmosphérique, et ensuite, une pluralité de cycles de nettoyage au cours de chacun desquels, on met en contact avec l'ensemble de la face de sortie du support filtrant, le liquide de nettoyage à la pression d'alimentation, puis on exerce sur le liquide de nettoyage en contact avec la face de sortie du filtre, une pression de nettoyage, par l'intermédiaire d'un gaz à une seconde pression P2 supérieure à la première pression P1, pour chasser le liquide de nettoyage et les résidus à travers le support filtrant, jusqu'à une extrémité d'entrée, puis on récupère le liquide de nettoyage et les résidus.

Afin de bien faire comprendre l'invention, on va décrire à titre d'exemple, en se référant aux figures jointes en annexe, un mode de réalisation d'un dispositif permettant de mettre en oeuvre le procédé suivant l'invention et un exemple de mise en oeuvre de ce procédé.

La figure 1 est une vue en élévation d'une installation industrielle de nettoyage de filtres à particules de véhicule automobile.

La figure 2 est une vue en perspective d'un dispositif de nettoyage de filtre à particules pouvant être utilisé isolément ou dans une installation telle que représentée sur la figure 1.

La figure 3 est une vue en coupe d'une partie du dispositif de nettoyage représenté sur la figure 2.

La figure 4 est un diagramme montrant la pression des fluides utilisés au cours des divers cycles d'un procédé de nettoyage suivant l'invention.

Les figures 5A et 5B sont des vues en coupe axiale d'un filtre à particules au cours de deux étapes du procédé de nettoyage suivant l'invention.

Les figures 6A et 6B sont des vues en perspective éclatée du filtre à particules au cours de deux étapes successives du procédé d'élimination des résidus du filtre.

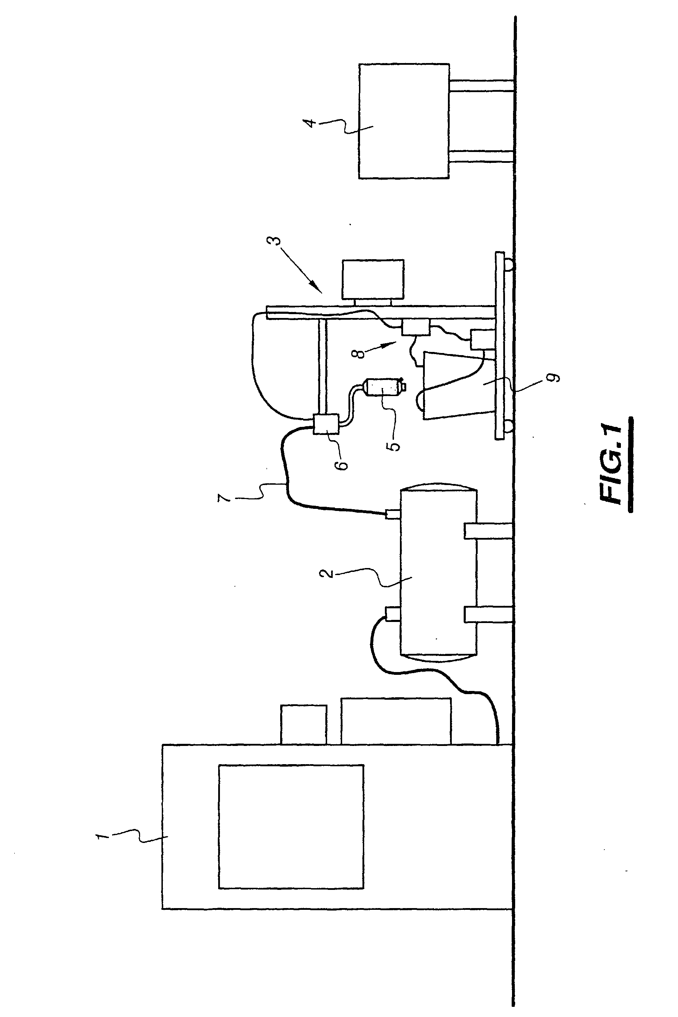

Sur la figure 1, on voit une installation industrielle de nettoyage et de séchage de filtres à particules qui comporte successivement un four 1 pour réaliser la combustion de suies résiduelles dans les filtres à particules, un réservoir d'air sous pression 2, un dispositif de nettoyage des filtres 3 et une étuve de séchage 4.

Le four 1 est un four électrique dans lequel on peut chauffer une charge constituée par des filtres à particules séparés de la ligne d'échappement d'un véhicule automobile, après un certain temps de fonctionnement.

A l'intérieur du four 1, les filtres à particules qui comportent un support filtrant en céramique monté à l'intérieur d'une enveloppe métallique sont chauffés à une température de l'ordre de 700°C permettant de réaliser la combustion des suies résiduelles contenues dans les supports filtrants des filtres à particules, lorsque ces filtres ne sont pas ou ne sont pas complètement régénérés, au moment de leur démontage.

Chacun des filtres à particules 5 régénérés dans le four 1 est monté, après refroidissement, sur le dispositif de nettoyage 3 avec lequel on réalise le nettoyage du filtre par le procédé selon l'invention, par l'intermédiaire d'une tuyauterie de sortie du filtre à particules, éventuellement courbe.

Le réservoir 2 renferme de l'air sous une pression supérieure à la pression atmosphérique pouvant aller jusqu'à 10 bars, la mise en pression de l'air dans le récipient 2 pouvant être assurée par un compresseur. Le dispositif de nettoyage 3 comporte une tête de nettoyage 6 qui est reliée par une conduite 7 au réservoir d'air sous pression 2, de manière à alimenter en air sous pression la tête de nettoyage 6 à laquelle est relié le filtre à particules 5.

La tête de nettoyage 6 est également reliée à un circuit 8 comportant une pompe et un filtre assurant le recyclage de l'eau utilisée pour le nettoyage récupérée dans un récipient de récupération d'effluents 9.

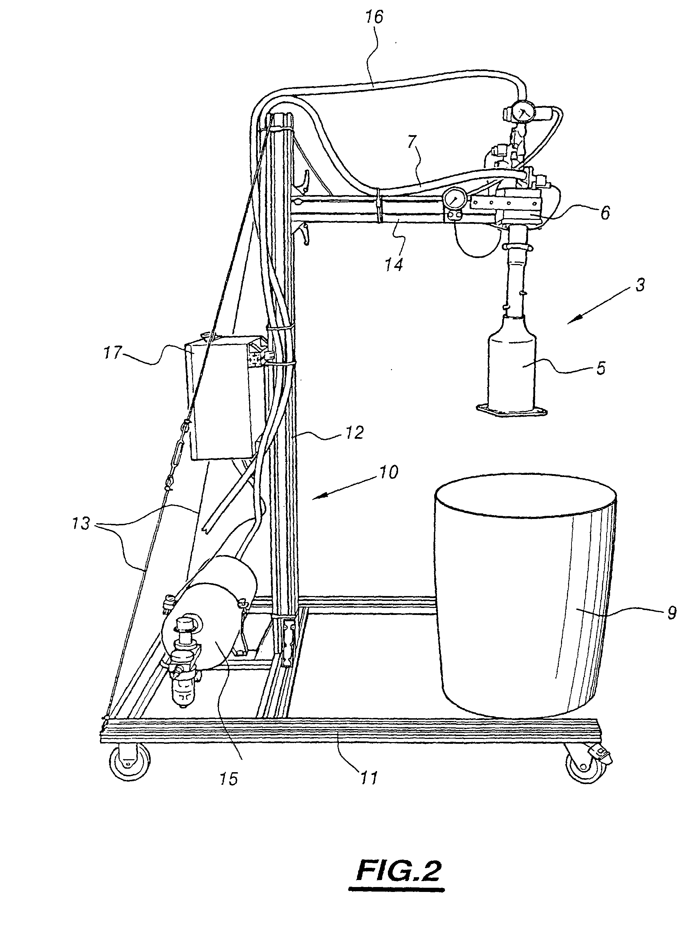

Sur la figure 2, on a représenté le dispositif de nettoyage 3 qui peut être intégré dans une installation de nettoyage industriel telle que représentée sur la figure 1 ou utilisé indépendamment d'une telle installation pour réaliser le nettoyage de filtres à particules qui ont été séparés d'une ligne d'échappement de véhicule automobile, après une régénération réalisée in situ dans la ligne d'échappement.

Les éléments de l'installation représentés sur la figure 2 correspondant aux éléments représentés sur la figure 1 sont désignés par les mêmes repères.

En particulier, l'installation de nettoyage représentée sur la figure 2 est désignée par le repère 3, la tête de nettoyage par le repère 6 et le bac de récupération d'effluents par le repère 9.

Le dispositif de nettoyage 3 représenté sur la figure 2 comporte un bâti 10 sur lequel sont fixés les différents éléments du dispositif de nettoyage qui seront décrits par la suite.

Le bâti 10 comporte une embase 11 qui peut être réalisée sous la forme d'un chariot comportant des roues pour être déplacé sur le sol de l'atelier dans lequel on effectue le nettoyage des filtres à particules, une colonne verticale 12 montée sur l'embase 11 et un bras horizontal 14 de support de la tête de nettoyage 6 qui est monté mobile dans la direction verticale et réglable sur la colonne 12.

La colonne 12 peut être maintenue sur l'embase, par des dispositifs tels que des haubans 13.

Dans le cas du dispositif de nettoyage de l'installation industrielle représentée sur la figure 1, la tête de nettoyage 6 est alimentée en air sous pression, par l'intermédiaire de la conduite 7, à partir d'un réservoir d'air sous pression 2 de grande capacité de l'installation industrielle.

Comme représenté sur la figure 2, il est possible également d'utiliser un réservoir 15 d'air sous pression fixé sur l'embase 11 réalisée sous forme d'un chariot et relié à la tête de nettoyage 6 par la conduite 7.

Au lieu d'utiliser un circuit de récupération de liquide de nettoyage tel que 8 représenté sur la figure 1, de l'eau de nettoyage peut être amenée à la tête de nettoyage 6 par une conduite 16 reliée à une installation de distribution d'eau à une pression, par exemple de 3 à 7 bars.

Un boîtier de commande 17 du dispositif de nettoyage est fixé sur la colonne 12 du bâti 10.

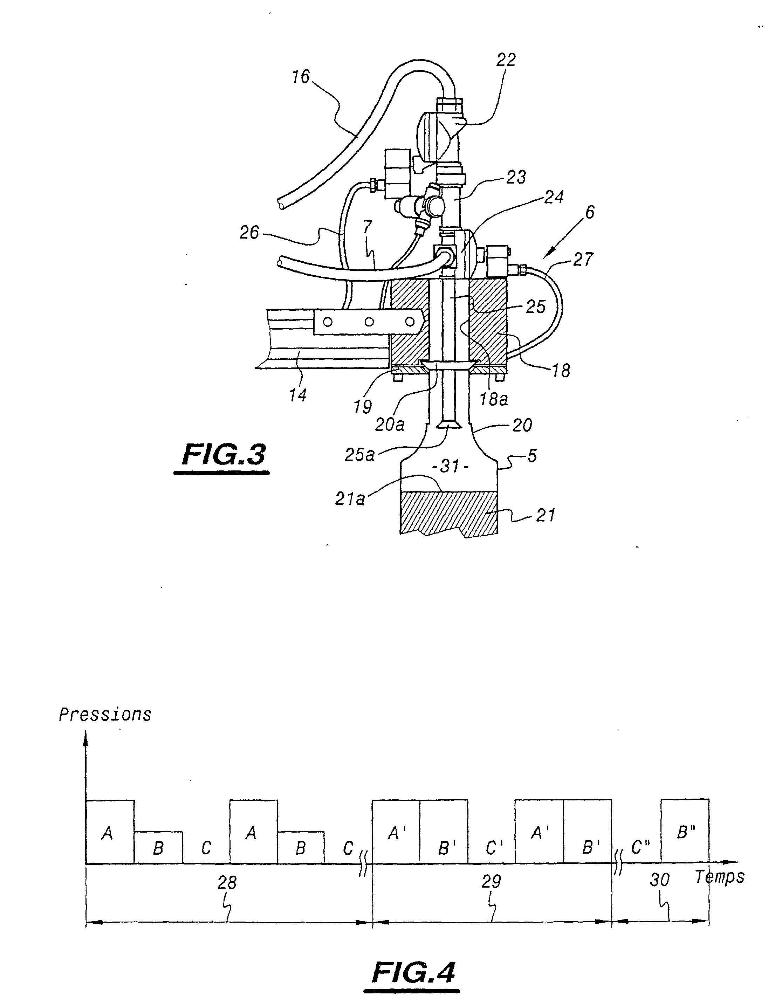

Comme il est visible sur les figures 2 et 3, la tête de nettoyage 6 comporte un support 18 qui est fixé à l'extrémité du bras 14 et qui est traversé par une ouverture 18a ayant un axe vertical dans la position de service de la tête de nettoyage 6 fixée à l'extrémité du bras horizontal 14.

Le support 18 de la tête de nettoyage 6 comporte, sur sa face inférieure, à la périphérie de l'ouverture débouchante 18a, un embrèvement circulaire dans lequel peut être engagée, pour sa fixation, une partie d'extrémité 20a de l'enveloppe métallique 20 du filtre à particules 5 à nettoyer ou d'un conduit de sortie du filtre.

La fixation de l'enveloppe métallique du filtre sous le support 18 de la tête de nettoyage 6 est réalisée par l'intermédiaire d'une plaque 19 comportant une ouverture d'engagement de l'extrémité 20a de l'enveloppe métallique 20 et fixée par des vis sur la face inférieure du support 18.

Le filtre à particules 5 est fixé sur la tête de nettoyage 6, par l'intermédiaire de son extrémité de sortie, la collerette d'extrémité 20a de l'enveloppe métallique 20 constituant la collerette de raccordement du filtre à particules à la partie aval de la ligne d'échappement dans laquelle sont évacués les gaz filtrés dans le filtre à particules.

L'enveloppe métallique 20 du filtre renferme le support filtrant 21 qui peut être constitué par un bloc de céramique traversé par des canaux de passage et de filtration des gaz d'échappement. Le support filtrant 21 comporte une face de sortie 21 a située en retrait par rapport à la partie de sortie de l'enveloppe métallique du filtre de diamètre réduit comportant la collerette de raccordement 20a.

Le nettoyage du filtre à particules est réalisé, comme il sera expliqué plus loin, par circulation forcée sous pression de liquide ou de gaz depuis la face de sortie 21 a du support filtrant jusqu'à la face d'entrée opposée du support filtrant (non représenté sur la figure 3).

Sur la face supérieure du support 18 sont fixés les composants hydrauliques et pneumatiques de la tête de nettoyage 6 raccordés respectivement à la conduite de liquide de nettoyage 16 et à la conduite d'air 7 et constituant l'ensemble hydraulique de la tête de nettoyage.

L'ensemble hydraulique de la tête de nettoyage comporte un premier boîtier de vanne 22 auquel est reliée la conduite de liquide de nettoyage 16, un second boîtier de vanne 24 auquel est reliée la conduite d'air 7, une tuyauterie de liaison 23 entre les boîtiers 22 et 24 et un conduit 25 relié à la sortie du boîtier 24 disposé en série avec le boîtier 22 introduit axialement à l'intérieur de l'ouverture 18a du support 18, pour déboucher, par une buse d'écoulement 25a, à l'intérieur de l'enveloppe de filtre 20 fixée à la tête de nettoyage 6, à une certaine distance au-dessus de la face de sortie 21a du support filtrant 21 du filtre à particules.

Les boîtiers de vanne 22 et 24 renferment chacun un détendeur et une électrovanne permettant de réguler la pression des fluides de nettoyage, de manière à les introduire à une pression déterminée et de façon contrôlée, par exemple une pression de 2 bars, dans la chambre supérieure de l'enveloppe métallique 20 du filtre à particules, au-dessus de la face de sortie 21a du support filtrant.

Sur les boîtiers 22 et 24 sont également fixés des manomètres permettant de mesurer la pression des fluides de nettoyage et des conduites respectives 26 et 27 d'évacuation de liquide de nettoyage ou d'air introduit en excès dans la partie hydraulique de la tête de nettoyage 6.

Les électrovannes permettent d'injecter le liquide de nettoyage et l'air sous pression, par le conduit 25, par phases successives, la pression de l'air injecté pouvant être réglée à l'une ou l'autre de deux pressions d'injection, par exemple 1 bar et 2 bars, pour réaliser successivement, une étape de mouillage du support filtrant du filtre à particules et une étape de nettoyage par balayage à l'aide de liquide de nettoyage à travers le support filtrant du filtre à particules.

Sur la figure 4, on a représenté des cycles successifs d'une première étape 28, d'une seconde étape 29 et d'une troisième étape 30 du procédé de nettoyage suivant l'invention.

La première étape 28 est une étape de mouillage du support filtrant du filtre à particules qui est réalisée en mettant en oeuvre des cycles identiques successifs comportant chacun une première phase A d'injection d'eau sous pression dans la partie supérieure de l'enveloppe du filtre à particules, une seconde phase B d'injection d'air et une troisième phase C de repos avant de recommencer un cycle comportant trois phases A, B et C.

De manière typique, la pression de l'eau injectée dans la partie supérieure de l'enveloppe du filtre pendant la phase A est de 2 bars, la durée t1 de la phase A est de 0,5 seconde, la pression de l'air injecté dans la phase B (pression P1) est de 1 bar, la durée t2 de la phase B est de 0,3 seconde et la durée t3 de la phase C est de 0,7 seconde.

Le mouillage du support filtrant du filtre à particules en matière céramique poreuse peut être réalisé généralement, au cours de n cycles successifs, n pouvant être égal à 5.

Après la phase de mouillage, la porosité du support filtrant 21 du filtre à particules 5 étant remplie d'eau, on réalise la phase 29 de nettoyage, en effectuant N cycles successifs identiques (N pouvant être égal à 25) comportant chacun une phase A' d'injection d'eau sous une pression supérieure à la pression atmosphérique, par exemple 2 bars, un cycle B' d'injection d'air sous pression à une pression P2 (par exemple 2 bars) et une phase de repos C'.

De manière typique, la durée des phases A' est de 0,5 seconde, la durée des phases B', de 0,3 seconde et la durée des phases C', de 0,7 seconde.

Par opposition aux cycles A, B, C effectués pendant la phase de mouillage, appelés cycles doux, on désignera par cycles durs, les cycles A', B', C' de la phase de nettoyage, du fait que la pression d'injection de l'air au cours des cycles doux P1 est sensiblement inférieure à la pression d'injection de l'air P2 au cours des cycles durs.

Pendant l'étape de nettoyage, l'eau contenue dans le support filtrant du filtre et l'eau introduite sous pression dans la partie supérieure de l'enveloppe de filtre est chassée à travers le filtre par l'air sous pression injecté pendant les phases B'.

L'eau ou le liquide de nettoyage imprégnant le filtre traverse le filtre et réalise le décollement ou la dissolution des résidus déposés dans le support filtrant, de sorte que l'eau à la sortie du filtre contient des résidus à l'état dissout ou en suspension.

L'eau sortant du support filtrant par la face d'entrée s'écoule dans le bac de récupération 9.

Pendant la phase de préséchage 30, on réalise des phases successives B" d'injection d'air séparées par des phases de repos C". L'air est injecté à la pression P2, par exemple à une pression de deux bars.

Le préséchage du support filtrant du filtre à particules est obtenu à la suite d'un nombre de cycles d'injection d'air qui peut être par exemple de quatre ou cinq cycles.

Le filtre à particules est ensuite séché, par exemple dans l'étuve 4 de l'installation représentée sur la figure 1.

Le filtre à particules peut ensuite être remonté sur un véhicule automobile.

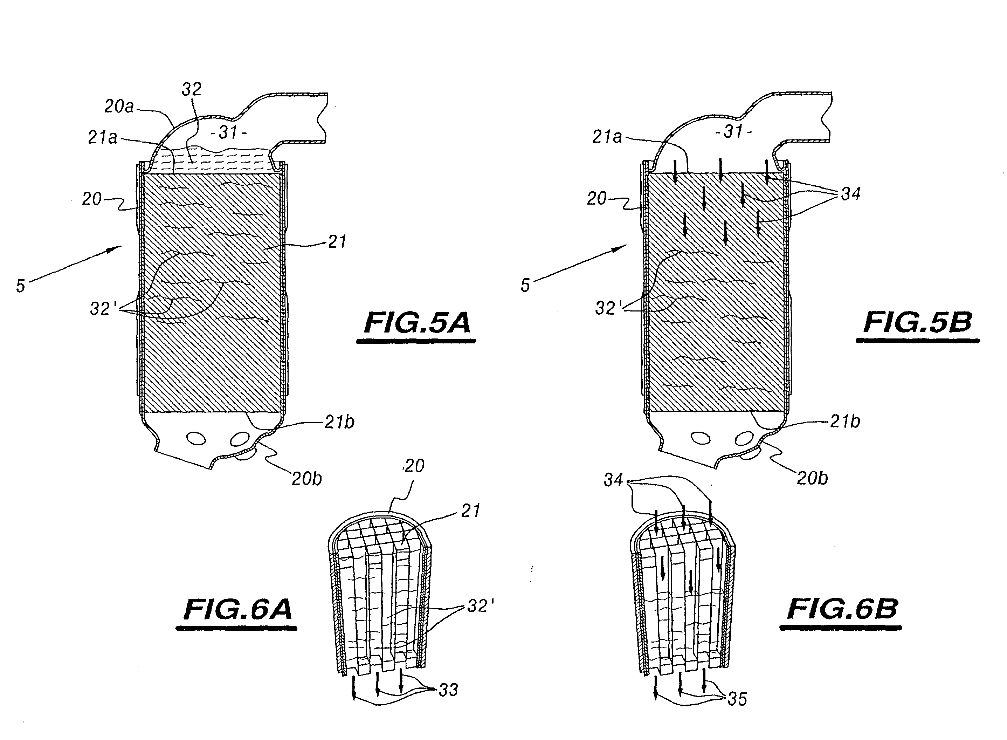

Sur les figures 5A et 5B, on a représenté, en coupe, le filtre à particules 5, pendant l'étape initiale de mouillage et pendant la phase de nettoyage, respectivement.

L'enveloppe métallique 20 du filtre à particules 5 comporte un embout d'extrémité 20a constituant la partie de sortie du filtre à particules qui est reliée à la tête de nettoyage 6, par l'intermédiaire d'une partie d'extrémité d'un conduit de liaison du filtre à particules.

La partie d'extrémité 20a de l'enveloppe métallique 20 du filtre délimite, avec la face de sortie 21a du support filtrant 21, une chambre 31.

A son extrémité opposée à la partie 20a, l'enveloppe métallique 20 du filtre comporte une partie 20b constituant la partie d'entrée du filtre à particules reliée à la partie amont de la ligne d'échappement sur le véhicule automobile.

Pendant l'étape de mouillage du filtre, on introduit de l'eau dans la chambre 31 du filtre à particules, par l'intermédiaire de la tête de nettoyage et de la conduite de liaison du filtre à particules, de manière à constituer une couche d'eau 32 en contact avec toute la surface 21a du support filtrant 21, pendant une phase A du cycle de mouillage.

L'injection d'air sous pression dans la phase ultérieure B d'un cycle de l'étape de mouillage permet de faire pénétrer l'eau à l'intérieur du support filtrant, de sorte qu'après une certaine durée de l'étape de mouillage, l'eau imprègne l'ensemble de la masse poreuse de l'élément filtrant 21, comme montré en 32'.

Comme il est visible sur la figure 6A, des particules de résidus contenus dans le support filtrant 21 sont détachées et s'écoulent avec le courant d'eau 32' traversant le support filtrant 22, pour parvenir dans une chambre de l'enveloppe métallique du filtre délimitée par la partie d'extrémité 20b de l'enveloppe métallique du filtre, comme représenté par les flèches 33 sur la figure 6A.

L'eau et les résidus traversant le support filtrant 21 s'écoulent par gravité dans le récipient de récupération d'effluents 9.

Comme il est visible sur la figure 5B, pendant l'étape de nettoyage, l'eau sous pression introduite dans la chambre 31 de l'enveloppe du filtre pendant une phase A' est poussée, pendant la phase suivante B', par l'air sous pression (flèche 34) à l'intérieur du support filtrant, de sorte qu'au cours de toute l'étape de nettoyage, de l'eau (ou autre liquide de nettoyage) traverse le support filtrant entre sa face de sortie 21a et sa face d'entrée opposée 21b, en entraînant des résidus sous forme dissoute ou sous forme de particules, l'eau ou le liquide de nettoyage et les particules s'écoulant dans la chambre de l'enveloppe du filtre délimitée par la seconde partie d'extrémité 20b de l'enveloppe métallique, comme représenté par les flèches 35 sur la figure 6B.

Le filtre à particules peut être associé à un catalyseur de dépollution placé en série en amont du filtre à particules, dans une enveloppe métallique commune.

Le procédé suivant l'invention permet donc de réaliser un nettoyage efficace de l'ensemble du support filtrant sans utiliser de buses mobiles ou de jets de fluide de nettoyage à forte pression.

Le procédé peut être mis en oeuvre en raccordant à la tête de nettoyage une partie d'extrémité de sortie du filtre à particules ou une conduite d'évacuation de forme quelconque (en particulier une conduite d'évacuation de gaz de forme courbe) du fait que le procédé ne met pas en oeuvre des jets sous pression dirigés.

L'invention ne se limite pas au mode de réalisation qui a été décrit.

C'est ainsi que les étapes de mouillage et de nettoyage peuvent être réalisées en un nombre de cycles quelconque et que les pressions d'eau ou liquide de nettoyage et d'air ainsi que les durées des différentes phases successives des étapes de mouillage et de nettoyage peuvent être différentes de celles qui ont été indiquées plus haut.

Le liquide de nettoyage peut être non seulement de l'eau mais encore tout liquide permettant de détacher ou de dissoudre les résidus dans le support filtrant du filtre sans détériorer le support filtrant.

L'invention peut être mise en oeuvre aussi bien dans une installation de traitement industriel que dans une installation d'importance plus modeste utilisée dans un garage ou un atelier accessible aux particuliers.

## Revendications

1. Procédé de nettoyage d'un filtre à particules (5) d'un véhicule automobile, comportant un support filtrant (21) ayant une structure poreuse, éventuellement associé à un catalyseur, fixé dans une enveloppe métallique (20), le filtre étant monté, en service, dans une ligne d'échappement du véhicule automobile de façon à être traversé, entre une extrémité d'entrée (20b) et une extrémité de sortie (20a), par un courant de gaz d'échappement du moteur du véhicule automobile renfermant des particules de suies dont une partie au moins qui est retenue par le support filtrant (21) subit une combustion, éventuellement catalysée, dans le support filtrant (21) sous l'effet d'un échauffement par les gaz d'échappement du moteur, pour régénérer le filtre dans la ligne d'échappement, le procédé de nettoyage consistant à démonter au moins une partie de la ligne d'échappement comportant le filtre à particules (5) pour la séparer du véhicule automobile et à faire passer, à travers le support filtrant (21), un courant d'un liquide de nettoyage, dans un sens allant de l'extrémité de sortie (21a) vers l'extrémité d'entrée (21b) du support filtrant, de manière à dissocier et à entraîner des résidus minéraux retenus dans le support filtrant (21), **caractérisé par le fait qu'**on réalise, successivement, une pluralité de cycles de mouillage du support filtrant (21), au cours de chacun desquels on met en contact avec l'ensemble d'une face de sortie (21a) du support filtrant (21), un liquide de nettoyage à une pression d'alimentation supérieure à la pression atmosphérique, puis on exerce sur le liquide de nettoyage en contact avec la face de sortie (21a) du support filtrant (21), une pression de mouillage, par l'intermédiaire d'un gaz à une première pression (P1) supérieure à la pression atmosphérique et, ensuite, une pluralité de cycles de nettoyage au cours de chacun desquels on met en contact, avec l'ensemble de la face de sortie (21a) du support filtrant (21), le liquide de nettoyage à la pression d'alimentation, puis on exerce sur le liquide de nettoyage en contact avec la face de sortie (21a) du support filtrant (21) une pression de nettoyage, par l'intermédiaire d'un gaz à une seconde pression (P2) supérieure à la première pression (P1), pour chasser le liquide de nettoyage et les résidus à travers le support filtrant jusqu'à une extrémité d'entrée (21b) du support filtrant (21), puis on récupère le liquide de nettoyage et les résidus.

2. Procédé suivant la revendication 1, **caractérisé par le fait que** le liquide de nettoyage est de l'eau et que le gaz à la première pression (P1) et à la seconde pression (P2) est de l'air comprimé.

3. Procédé de nettoyage suivant la revendication 2, **caractérisé par le fait que** l'eau est introduite dans le filtre à une pression de 2 bars et l'air à une première pression (P1) de 1 bar pendant l'étape de mouillage et à une seconde pression (P2) de 2 bars, pendant l'étape de nettoyage.

4. Procédé suivant l'une quelconque des revendications 1 à 3, **caractérisé par le fait que** chacun des cycles de l'étape de mouillage et chacun des cycles de l'étape de nettoyage comportent une première phase d'injection d'eau sous pression (A, A'), une seconde phase d'injection d'air sous pression (B, B') dans le filtre et une troisième phase (C, C') de repos sans injection d'eau ou d'air dans le filtre.

5. Procédé suivant la revendication 4, **caractérisé par le fait que** l'étape de mouillage comporte cinq cycles successifs et l'étape de nettoyage vingt-cinq cycles successifs.

6. Procédé suivant l'une quelconque des revendications 1 à 5, **caractérisé par le fait qu'**on réalise, après l'étape de nettoyage, une phase de préséchage (30) du filtre à particules dans laquelle on introduit, par phases successives (B") séparées par des phases de repos (C"), de l'air à la pression (P2).

7. Procédé suivant la revendication 6, **caractérisé par le fait que** l'étape de préséchage comporte quatre ou cinq cycles successifs.

8. Procédé suivant la revendication 7, **caractérisé par le fait qu'**on effectue, après l'étape de préséchage 30, une étape de séchage du filtre dans une étuve.

9. Dispositif de nettoyage d'un filtre à particules (5) d'un véhicule automobile, comportant un support filtrant (21) ayant une structure poreuse, éventuellement associé à un catalyseur, fixé dans une enveloppe métallique (20), le filtre étant monté, en service, dans une ligne d'échappement du véhicule automobile de façon à être traversé, entre une extrémité d'entrée (20b) et une extrémité de sortie (20a), par un courant de gaz d'échappement du moteur du véhicule automobile renfermant des particules de suies dont une partie au moins qui est retenue par le support filtrant (21) subit une combustion, éventuellement catalysée, dans le support filtrant (21) sous l'effet d'un échauffement par les gaz d'échappement du moteur, pour régénérer le filtre dans la ligne d'échappement, **caractérisé par le fait qu'**il comporte une tête de nettoyage (6) comportant un support (18) et des moyens de fixation d'une partie de sortie (20a) de l'enveloppe métallique (20) du filtre à particules (5) sur le support (18), au niveau d'une ouverture traversante (18a) du support (18) et un ensemble hydraulique (22, 24, 25) d'introduction de liquide de nettoyage sous pression ou d'air, à travers le support (18) de la tête de nettoyage (6) comportant un conduit (25) débouchant dans une chambre (31) délimitée par la partie de sortie (20a) de l'enveloppe métallique du filtre et une face de sortie (21a) du support filtrant (21).

10. Dispositif suivant la revendication 9, **caractérisé par le fait que** l'ensemble hydraulique d'introduction de liquide de nettoyage et de gaz sous pression dans la chambre (31) de la partie d'extrémité de sortie du filtre à particules (5) comporte une conduite d'introduction (25) traversant le support de filtre (18) suivant une ouverture (18a) du support de filtre, un premier support de vanne (22) relié à une conduite (16) d'alimentation en liquide de nettoyage, un second support de vanne (24) relié à une conduite (7) d'alimentation en air sous pression, le conduit d'introduction (25) étant relié au premier support de vanne (22) et au second support de vanne (24) qui comportent des électrovannes de commande d'introduction de liquide de nettoyage et d'air sous pression dans la conduite d'introduction (25).

## Patentansprüche

1. Verfahren zum Reinigen eines Partikelfilters (5) eines Kraftfahrzeugs mit einem einen porösen Aufbau aufweisenden Filtrierträger (21), welcher möglicherweise mit einem Katalysator verbunden und in einer metallischen Umhüllung (20) befestigt ist, wobei der Filter im Betrieb in einer Abgasanlage des Kraftfahrzeugs auf solche Weise eingebaut ist, dass er zwischen einem Einlassende (20b) und einem Auslassende (20a) von einer Strömung des Motorabgases des Kraftfahrzeugs durchströmt wird, wobei er Rußpartikel einschließt, von denen wenigstens ein Teil, der durch den Filtrierträger (21) zurückgehalten wird, einer Verbrennung, möglicherweise einer katalysierten, in dem Filtrierträger (21) durch eine Aufheizung durch die Abgase des Motors unterzogen wird, um den Filter in der Abgasanlage zu regenerieren, wobei das Verfahren zum Reinigen darin besteht, mindestens einen Abschnitt der Abgasanlage mit dem Partikelfilter (5) zur Trennung vom Kraftfahrzeug auszubauen, und durch den Filtrierträger (21) eine Reinigungsflüssigkeit hindurch strömen zu lassen, deren Strömungsrichtung vom Auslassende (21 a) zum Einlassende (21b) des Filtrierträgers (21) verläuft, um auf diese Weise die in dem Filtrierträger (21) zurückgehaltenen mineralischen Rückstände abzutrennen und mitzunehmen, **gekennzeichnet durch** folgende aufeinanderfolgende Verfahrensschritte:
- Durchführen einer Vielzahl von Anfeuchtungszyklen des Filtrierträgers (21), wobei im Verlauf eines jeden Zyklus eine Reinigungsflüssigkeit unter einem oberhalb des atmosphärischen Drucks liegenden Versorgungsdruck in Kontakt mit dem Aufbau einer Seite des Auslasses (21a) des Filtrierträgers (21) gebracht wird, wobei dann auf die mit dem Aufbau der Seite des Auslasses (21a) des Filtrierträgers (21) in Kontakt stehende Reinigungsflüssigkeit ein Anfeuchtungsdruck mittels eines Gases unter einem ersten Druck (P1) ausgeübt wird, der oberhalb des atmosphärischen Drucks liegt; und dann
- Durchführen einer Vielzahl von Reinigungszyklen des Filtrierträgers (21), wobei im Verlauf eines jeden Zyklus die Reinigungsflüssigkeit unter dem Versorgungsdruck in Kontakt mit dem Aufbau der Seite des Auslasses (21a) des Filtrierträgers (21) gebracht wird, wobei dann auf die mit dem Aufbau der Seite des Auslasses (21a) des Filtrierträgers (21) in Kontakt stehende Reinigungsflüssigkeit ein Reinigungsdruck mittels eines Gases unter einem zweiten Druck (P2) ausgeübt wird, der oberhalb des ersten Drucks (P1) liegt, um die Reinigungsflüssigkeit und die Rückstände **durch** den Filtri erträger hindurch bis zu einem Einlassende (21b) des Filtriertägers (21) herauszutreiben; und
- Zurückgewinnen der Reinigungsflüssigkeit und der Rückstände.

2. Verfahren nach Anspruch 1, **dadurch gekennzeichnet, dass** die Reinigungsflüssigkeit aus Wasser besteht, und dass das Gas unter dem ersten Druck (P1) und unter dem zweiten Druck (P2) aus Druckluft besteht.

3. Verfahren nach Anspruch 2, **dadurch gekennzeichnet, dass** das Wasser unter einem Druck von 2 bar, die Luft unter einem ersten Druck (P1) von 1 bar während des Verfahrensschritts Anfeuchten und unter einem zweiten Druck von 2 bar während des Verfahrensschritts Reinigen in den Filter eingebracht wird.

4. Verfahren nach einem der Ansprüche 1 bis 3, **dadurch gekennzeichnet, dass** jeder der Zyklen des Verfahrensschritts Anfeuchten einen ersten Teilschritt Einspritzen von Wasser unter Druck (A, A') in den Filter und einen zweiten Teilschritt Einblasen von Luft unter Druck (B, B') in den Filter, sowie einen dritten Teilschritt Ruhen (C, C') ohne Einspritzen von Wasser oder Einblasen von Luft in den Filter aufweist.

5. Verfahren nach Anspruch 4, **dadurch gekennzeichnet, dass** der Verfahrensschritt Anfeuchten fünf aufeinanderfolgende Zyklen aufweist, und dass der Verfahrensschritt Reinigen fünfundzwanzig aufeinanderfolgende Zyklen aufweist.

6. Verfahren nach einem der Ansprüche 1 bis 5, **dadurch gekennzeichnet, dass** nach dem Verfahrensschritt Reinigen ein Teilschritt Vortrocknen (30) des Partikelfilters durchgeführt wird, in welchem in durch Teilschritte Ruhen (C") getrennten aufeinanderfolgenden Teilschritten (B") Luft unter dem Druck (P2) eingeblasen wird.

7. Verfahren nach Anspruch 6, **dadurch gekennzeichnet, dass** der Teilschritt Vortrocknen vier oder fünf aufeinanderfolgende Zyklen aufweist.

8. Verfahren nach Anspruch 7, **dadurch gekennzeichnet, dass** nach dem Teilschritt Vortrocknen (30) ein Teilschritt Trocken des Filters in einem Trocken- bzw. Wärmeschrank erfolgt.

9. Vorrichtung zum Reinigung eines Partikelfilters (5) eines Kraftfahrzeugs mit einem einen porösen Aufbau aufweisenden Filtrierträger (21), welcher möglicherweise mit einem Katalysator verbunden und in einer metallischen Umhüllung (20) befestigt ist,
wobei der Filter im Betrieb in einer Abgasanlage des Kraftfahrzeugs auf solche Weise eingebaut ist, dass er zwischen einem Einlassende (20b) und einem Auslassende (20a) von einer Strömung des Motorabgases des Kraftfahrzeugs durchströmt wird, wobei er Rußpartikel einschließt, von denen wenigstens ein Teil, der durch den Filtrierträger (21) zurückgehalten wird, einer Verbrennung, möglicherweise einer katalysierten, in dem Filtrierträger (21) durch eine Aufheizung durch die Abgase des Motors unterzogen wird, um den Filter in der Abgasanlage zu regenerieren, **dadurch gekennzeichnet, dass** sie Folgendes aufweist:
- einen Reinigungskopf (6) mit einem Träger (18) und Halteeinrichtungen für einen Abschnitt des Auslasses (20a) der metallischen Umhüllung (20) des Partikelfilters (5) an dem Träger (18) auf Höhe einer durchgehenden Öffnung (18a) des Trägers (18); und
- eine hydraulische Vorrichtung (22, 24, 25) zum Einbringen von Reinigungsflüssigkeit unter Druck oder von Luft durch den Träger (18) des Reinigungskopfes (6), welcher eine in eine Kammer (31) mündende Leitung (25) aufweist, die von dem Abschnitt des Auslasses (20a) der metallischen Umhüllung des Filters und einer Seite des Auslasses (21a) des Filterträgers (21) gebildet ist.

10. Vorrichtung nach Anspruch 9, **dadurch gekennzeichnet, dass** die hydraulische Vorrichtung zum Einbringen von Reinigungsflüssigkeit oder Gas unter Druck in die Kammer (31) des Endabschnitts des Auslasses des Partikelfilters (5) Folgendes aufweist:
- eine Ein führungsleitung (25), die durch den Träger des Filters (18) entlang einer Öffnung (18a) des Trägers des Filters hindurchgeht,
- einen ersten Ventilträger (22), der mit einer Versorgungsleitung (16) für Reinigungsflüssigkeit verbunden ist, und
- einen zweiten Ventilträger (24), der mit einer Versorgungsleitung (7) für Druckluft verbunden ist,
wobei die Einführungsleitung (25) mit dem ersten Ventilträger (22) und mit dem zweiten Ventilträger (24) verbunden ist, welche Elektromagnetventile zur Steuerung der Einbringung von Reinigungsflüssigkeit und Druckluft in die Einführungsleitung (25) aufweisen.

## Claims

1. Method of cleaning a particle filter (5) of an automobile vehicle comprising a filter medium (21) having a porous structure, possibly associated with a catalytic converter, and fixed into a metal enclosure (20), the filter being mounted, in service, in an exhaust system of an automobile vehicle so that there passes through it, between an inlet end (20b) and an outlet end (20a), a flow of exhaust gas from the engine of the automobile vehicle containing particles of soot, at least a portion of which is retained by the filter medium (21) and is subjected to combustion, possibly aided by catalysis, in the filter medium (21) as a result of heating by the exhaust gases from the engine to regenerate the filter in situ in the exhaust system, the cleaning method consisting in demounting at least a portion of the exhaust system containing the particle filter (5) to separate it from the automobile vehicle and passing a flow of a cleaning liquid through the filter medium (21) in a direction from the outlet end (21a) to the inlet end (21b) of the filter medium to separate and entrain mineral residues retained in the filter medium (21), which method is **characterised in that** a plurality of successive cycles of wetting the filtering medium (21) are carried out during each of which a cleaning liquid is brought into contact with the whole of an outlet face (21a) of the filter medium (21) at a feed pressure higher than atmospheric pressure, after which a wetting pressure is exerted on the cleaning liquid in contact with the outlet face (21a) of the filter medium (21) by means of a gas at a first pressure (P1) higher than atmospheric pressure, followed by a plurality of cleaning cycles during each of which the cleaning liquid at the feed pressure is brought into contact with the whole of the outlet face (21a) of the filter medium (21), after which a cleaning pressure is exerted on the cleaning liquid in contact with the outlet face (21a) of the filter medium (21) by means of a gas at a second pressure (P2) higher than the first pressure (P1) to force the cleaning liquid and the residues through the filter medium to an inlet end (21b) of the filter medium (21), after which the cleaning liquid and the residues are recovered.

2. Method according to claim 1, **characterised in that** the cleaning liquid is water and the gas at the first pressure (P1) and at the second pressure (P2) is compressed air.

3. Cleaning method according to claim 2,
**characterised in that** the water is introduced into the filter at a pressure of 2 bars and the air at a first pressure (P1) of 1 bar during the wetting step and at a second pressure (P2) of 2 bars during the cleaning step.

4. Method according to any of claims 1 to 3,
**characterised in that** each of the cycles of the wetting step and each of the cycles of the cleaning step comprises a first phase (A, A') of injecting water under pressure, a second phase (B, B') of injecting air under pressure into the filter, and a resting third phase (C, C') with no injection of water or air into the filter.

5. Method according to claim 4, **characterised in that** the wetting step comprises five successive cycles and the cleaning step comprises 25 successive cycles.

6. Method according to any of claims 1 to 5,
**characterised in that**, after the cleaning step, there is executed a phase (30) of predrying the particle filter in which air at the pressure (P2) is introduced during successive phases (B") separated by resting phases (C").

7. Method according to claim 6, **characterised in that** the predrying step comprises four or five successive cycles.

8. Method according to claim 7, **characterised in that**, after the predrying step (30), there is executed a step of drying the filter in an oven.

9. Device for cleaning a particle filter (5) of an automobile vehicle comprising a filter medium (21) having a porous structure, possibly associated with a catalytic converter, and fixed into a metal enclosure (20), the filter being mounted, in service, in an exhaust system of the automobile vehicle so that there passes through it, from an inlet end (20b) to an outlet end (20a), a flow of exhaust gas from the engine of the automobile vehicle containing particles of soot, at least some of which is retained by the filter medium (21) and is subjected to combustion, possibly aided by catalysis, in the filter medium (21) as a result of being heated by the exhaust gases from the engine to regenerate the filter in situ in the exhaust system, which device is **characterised in that** it comprises a cleaning head (6) comprising a support (18), means for fixing an outlet portion (20a) of the metal enclosure (20) of the particle filter (5) to the support (18) at an opening (18a) through the support (18), and a hydraulic system (22, 24, 25) for introducing cleaning liquid or air under pressure through the support (18) of the cleaning head (6) and comprising a pipe (25) discharging into a chamber (31) delimited by the outlet portion (20a) of the metal enclosure of the filter and an outlet face (21a) of the filter medium (21).

10. Device according to claim 9, **characterised in that** the hydraulic system for introducing cleaning liquid and gas under pressure into the chamber (31) in the outlet end portion of the particle filter (5) comprises an inlet pipe (25) passing through an opening (18a) in the filter medium (18), a first valve support (22) connected to a cleaning liquid feed pipe (16), and a second valve support (24) connected to a compressed air feed pipe (7), the inlet pipe (25) being connected to the first valve support (22) and to the second valve support (24), which comprise solenoid valves controlling the introduction of cleaning liquid and air under pressure into the inlet pipe (25).
